# EUROPEAN PATENT SPECIFICATION

(11) **EP 2 311 781 B1**
(45) Date of publication and mention of the grant of the patent: **13.02.2013**
(21) Application number: 10013711.6
(22) Date of filing: 15.10.2010
(51) Int. Cl.: C03B 37/014, C03B 19/14

(54) **Method for producing quartz glass preform**
Verfahren zur Herstellung einer Quarzglasvorform
Procédé de production de préforme de verre de quartz

(30) Priority: 15.10.2009 JP 2009238371
(43) Date of publication of application: 20.04.2011
(73) Proprietor: Asahi Glass Company, Limited, Chiyoda-ku Tokyo 100-8405 (JP)
(72) Inventor: Inaba, Tadayuki, Tokyo 100-8405, (JP); Koike, Akio, Tokyo 100-8405, (JP)
(74) Representative: Müller-Boré & Partner Patentanwälte

(56) References cited:
- JP-A- 10 081 532
- JP-A- 57 170 832
- JP-A- 62 091 432
- JP-A- 63 282 138
- KARSTENSEN H: "FABRICATION TECHNIQUES OF OPTICAL FIBRES", JOURNAL OF THE INSTITUTION OF ELECTRONICS ANDTELECOMMUNICATION ENGINEERS, ENGINEERS, NEW DEHLI, vol. 32, no. 4, 1 January 1986 (1986-01-01), pages 232-242, XP001032498, ISSN: 0377-2063

## Description

The present invention relates to a method for producing a large-sized quartz glass preform by a vapor phase axial deposition method (VAD method). More specifically, the invention relates to a method for producing a quartz glass preform of 50 kg or more in mass, or a quartz glass preform having a diameter of 400 mm or more, by a vapor phase axial deposition method (VAD method).

In a method for producing a quartz glass preform by a vapor phase axial deposition method (VAD method), a silicon raw material such as silicon halide is hydrolyzed in a flame projected from a burner, silica fine particles formed are deposited on a rotating target (a starting material on which silica fine particles are deposited) and grown thereon to obtain a porous quartz glass body, and then the porous quartz glass body obtained is heated in vacuum or in an inert gas atmosphere to vitrify the glass body. Thus, a quartz glass preform is obtained,
At first, the method for producing a quartz glass preform by the VAD method was developed as a method for producing an optical fiber preform. This method can produce a quartz glass preform free of a metal component and having a low OH group concentration. As a result, the method can be also applied to the production of a lens material for lithography in a vacuum ultraviolet region.
When a quartz glass preform is produced for these applications by the VAD method, it is desired for the reduction of production cost that a quartz glass preform can be produced in high speed and a large-sized quartz glass preform can be produced. The term "large-sized quartz glass preform" referred to herein means, for example, a quartz glass preform of 50 kg or more in mass or a quartz glass preform having a diameter of 400 mm or more.

Possible method for producing a large-sized quartz glass preform by the VAD method includes (I) a method of increasing a size of an apparatus itself used in the production of a porous quartz glass body which is an intermediate material of a quartz glass preform, (II) a method of using a plurality of gas burners in producing a porous quartz glass body which is an intermediate material of a quartz glass preform, and (III) a method of increasing bulk density of a porous quartz glass body which is an intermediate material of a quartz glass preform.
Of those methods, the method (I) has the problems that equipment investment increases and that disposal of heat generated in large quantity is not easy. The method (II) involves a formation step of a porous quartz glass body by applying a flame having high temperature and containing moisture in high concentration to a surface of the porous quartz glass body in the course of the production of a porous quartz glass body. This causes variation of OH group concentration in a quartz glass preform produced through a porous quartz glass body, and as a result, striae may be generated and a quartz glass preform may not achieve sufficient homogeneity. Accordingly, the method (III) is a realistic method for producing a large-sized quartz glass preform by the VAD method.

It is therefore considered that a large-sized quartz glass preform can be produced by producing a porous quartz glass body having higher bulk density. Production of a porous quartz glass body having a bulk density of 0.3 g/cm³ or more is desirable for the production of a quartz glass preform of 50 kg or more in mass or a quartz glass preform having a diameter of 400 mm or more.
Increasing a combustible gas (generally hydrogen gas) and a combustion supporting gas (generally oxygen gas), which are fed to a burner, is first considered as the means for producing a porous quartz glass body having higher bulk density. However, the means involves concerns that (1) since large amounts of a combustible gas and a combustion supporting gas are required, the production cost of a porous quartz glass body may increase, and (2) the wall surface of a reactor for conducting the production of a porous quartz glass body may be damaged by strong fire power. Therefore, the means is not considered to be desirable means.

The production method of a porous quartz glass preform described in Patent Document 1 succeeded to stably form a porous quartz glass body by disposing a burner such that the angle made by the central axis of the burner relative to a lower direction of the rotation axis of a target is within a range of from 10° to 30°. However, the bulk density of the porous quartz glass body obtained by this method is as small as 0.2 g/cm³, and the method was not sufficient to produce a quartz glass preform of 50 kg or more in mass or a quartz glass preform having a diameter of 400 mm or more.
When the mounting angle of a burner, that is, the angle between the rotation axis of a target and the central axis of a burner, is changed, an angle of a flow direction of a flame projected from a burner relative to the surface of a target or the surface of a porous quartz glass body deposited on the target changes. Here, heat energy received from a flame per unit area of a porous quartz glass body increases as the angle of the flow direction of the flame to the surface of a target (or the surface of a porous quartz glass body deposited on the target) approaches vertical (in other word, as the mounting angle becomes small).. From this fact, when such a method is applied, a porous quartz glass body having high bulk density can theoretically be produced.

However, in the case of attempting to produce a porous quartz glass body by decreasing the mounting angle of a burner to an extent such that the angle of the flow direction of a flame to the surface of a target (or the surface of a porous quartz glass body deposited on the target) becomes nearly vertical, the following problems arise. For example, when the porous quartz glass body grows to increase its mass, a portion having low bulk density in the periphery of the porous quartz glass body cannot sustain the weight itself to collapse, or cause crack generation in the porous quartz glass body, thereby resulting in insufficient strength of the porous quartz glass body produced. There is a further problem that deposition of silica fine particles on the surface of a target (or the surface of a porous quartz glass body deposited on the target) becomes uneven, and the outer diameter of the porous quartz glass body becomes non-uniform in a growth direction.
Thus, a porous quartz glass body having high bulk density could not be stably produced under the conventional conditions by decreasing the mounting angle of a burner.
Patent Document 1: JP-A 63-282138 (1988)

JP-A-62-091432 discloses the production of a porous quartz glass base material.

To solve the above-described problems in the prior art, the present invention has an object to provide a method for efficiently and stably producing a large-sized quartz glass preform, specifically, a quartz glass preform of 50 kg or more in mass or a quartz glass preform having a diameter of 400 mm or more, by VAD method.
Furthermore, in order to achieve the above object, the present invention has an object to provide a method for efficiently and stably producing a porous quartz glass body having an average bulk density of 0.3 g/cm³ or more by the VAD method.
In the present specification, the phrase of "efficiently producing a large-sized quartz glass preform" means "producing a large-sized quartz glass preform in a yield of 50% or more". Furthermore, the phrase of "efficiently producing a porous quartz glass body having an average bulk density of 0.3 g/cm³ or more" means "producing a porous quartz glass body having an average bulk density of 0.3 g/cm³ or more in a yield of 50% or more".

As a result of investigations of a method for efficiently and stably producing a porous quartz glass body having high bulk density by decreasing mounting angle of a burner, the present inventors have found that it is important (1) to sufficiently react a silicon raw material by maintaining a distance between an end face of a burner and a surface of a target (or a surface of a porous quartz glass body deposited on the target) in an appropriate distance when producing a porous quartz glass body, and (2) to efficiently deposit silica fine particles on a surface of a target and to prevent irregular deposition of silica fine particles, by inhibiting fluctuation of a flame projected from a burner.

In more specifically, in order to sufficiently react a silicon raw material, a distance between an end face of a burner and the surface of a target (or the surface of a porous quartz glass body deposited on the target) must be maintained in a certain distance for giving sufficient reaction time to the silicon raw material in a flame projected from the burner. However, where the distance between the end face of a burner and the surface of a target (or the surface of a porous quartz glass body deposited on the target) is too large, a flame contacting the surface of a target (or the surface of a porous quartz glass body deposited on the target) is liable to fluctuate. When flame fluctuates, the temperature difference having caused between the flame and the target is disturbed to cause the phenomenon that silica fine particles which should be directed to the target deviate or the silica fine particles deposit on an undesired portion on the surface of the target. This leads to problems such as a decrease in yield of a porous quartz glass body and a distorted shape of a porous quartz glass body.

Accordingly, the distance between the end face of a burner and the surface of a target (or the surface of a porous quartz glass body deposited on the target), a gas flow rate from a burner and a mounting angle of the burner must be kept in appropriate conditions in order to stably produce a porous quartz glass body having high bulk density.

The present invention is based on the above mentioned perceptions and provides the following methods for producing a porous quartz glass body and method for producing a quartz glass preform.
(1) A method for producing a porous quartz glass body, comprising feeding a silicon raw material to a central nozzle of a multitubular burner having a plurality of gas feeding nozzles arranged concentrically pattern, hydrolyzing the silicon raw material in a flame projected from the multitubular burner to form silica fine particles in a reactor, and depositing and growing the formed silica fine particles on a rotating target,
   wherein the multitubular burner comprises a combustible gas feeding nozzle and a combustion supporting gas feeding nozzle, characterized in that
   an angle between a central axis of the multitubular burner or a line obtained by projecting the central axis of the multitubular burner onto a plane that includes a rotation axis of the target and is parallel to the central axis of the multitubular burner, and the rotation axis of the target is less than 10°,
   a distance between an end face of the central nozzle of the multitubular burner and an intersection point of a central axis of the multitubular burner with a surface of the target or a surface of the porous quartz glass body deposited on the target is from 3d to 6d mm, in which d is a diameter of an outermost periphery of the multitubular burner, and
   an amount of a gas fed to the central nozzle is 0.30S_{c} liter/min or less under the standard state (0°C and 1 atm), in which S_{c} mm² is an opening area of the central nozzle of the multitubular burner.
(2) The method for producing a porous quartz glass body according to the above (1), wherein an amount of a gas fed to the innermost combustible gas feeding nozzle among gas feeding nozzles other than the central nozzle is 0.33S_{f} liter/min or less under the standard state (0°C and 1 atm), in which S_{f} mm² is an opening area of said gas feeding nozzle.
(3) The method for producing a porous quartz glass body according to the above (1) or (2), wherein an amount of a gas fed to the innermost combustion supporting gas feeding nozzle among gas feeding nozzles other than the central nozzle is 0.1Sₛ liter/min or less under the standard state (0°C and 1 atm), in which Sₛ mm² is an opening area of said gas feeding nozzle.
(4) The method for producing a porous quartz glass body according to any one of the above (1) to (3), wherein the silicon raw material fed to the central nozzle of the multitubular burner has a vapor pressure of 10,000 Pa or more at 100°C.
(5) The method for producing a porous quartz glass body according to any one of the above (1) to (4), wherein the reactor has an inner wall that is located lower than a surface of the target or a surface of the porous quartz glass body deposited on the target, and wherein the inner wall has a temperature maintained at 300°C or higher.
(6) The method for producing a porous quartz glass body according to any one of the above (1) to (5), wherein a surface of the porous quartz glass body contacting the flame projected from the multitubular burner has a maximum temperature of 1,000 to 1,300°C.
(7) A method for producing a quartz glass preform, comprising:
   the method for producing a porous quartz glass body according to any one of the above (1) to (6);
   heating the porous quartz glass body in vacuum or in an atmosphere containing helium gas as a main component; and
   vitrifying the porous quartz glass body.

According to the method for producing a porous glass body of the present invention, a porous quartz glass body having high bulk density, specifically a porous quartz glass body having an average bulk density of 0.3 g/cm³ or more, can efficiently and stably be produced. When the porous quartz glass body obtained by the production method of the present invention is vitrified, a large-sized quartz glass preform, specifically a quartz glass preform of 50 kg or more in mass or a quartz glass preform having a diameter of 400 mm or more, can efficiently and stably be produced.
In the method for producing a porous glass body of the present invention, the angle between the central axis of the multitubular burner and the rotation axis of the target is small as less than 10°, which prevents an inner wall of a reactor from suffering a damage due to excessive heating by a flame projected from the multitubular burner. Consequently, useful life of a reactor is prolonged, and as a result, a quartz glass preform can be produced at low cost
FIG. 1 is a schematically cross-sectional view showing one example of a multitubular burner.
FIG. 2 is a schematic view showing positional relationship between a multitubular burner and a target

- 100:: Multitubular burner
- 1:: Central nozzle
- 2:: First peripheral nozzle
- 3:: Second peripheral nozzle
- 4:: Third peripheral nozzle
- 5:: Fourth peripheral nozzle
- 6:: Fifth peripheral nozzle
- 7:: Sixth peripheral nozzle
- 8:: Seventh peripheral nozzle
- 9:: Eighth peripheral nozzle
- 10:: Ninth peripheral nozzle
- 11:: Tenth peripheral nozzle
- 200:: Flame
- 300:: Target
- 400:: Porous quartz glass body

A method for producing a porous glass body of the present invention is described below by referring to the drawings.

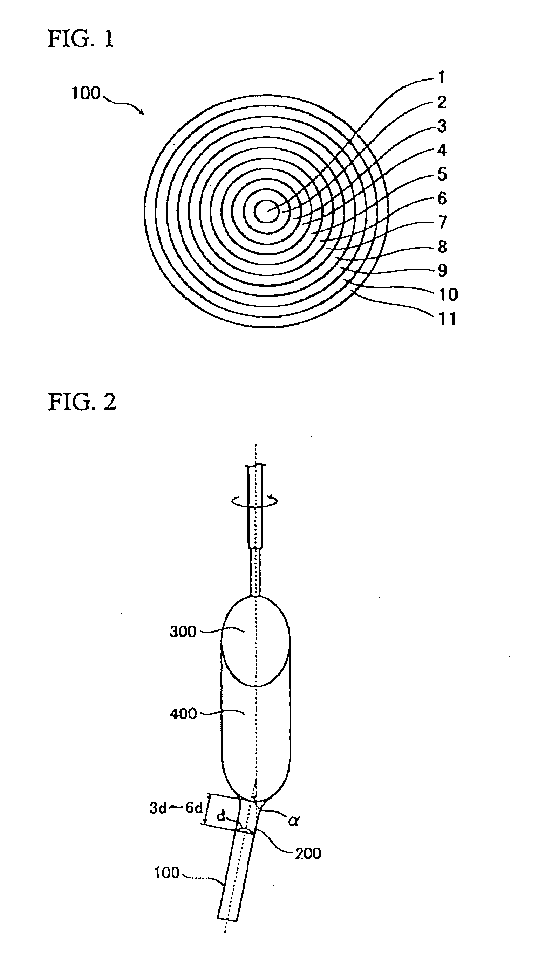

FIG. 1 is a schematically cross-sectional view showing one example of a multitubular burner used in the method for producing a porous glass body of the present invention. A multitubular burner 100 shown in FIG. 1 is an eleven-tube structure type multitubular burner comprising a central nozzle 1 at the central portion, having a first peripheral nozzle 2, a second peripheral nozzle 3, a third peripheral nozzle 4, a fourth peripheral nozzle 5, a fifth peripheral nozzle 6, a sixth peripheral nozzle 7, a seventh peripheral nozzle 8, an eighth peripheral nozzle 9, a ninth peripheral nozzle 10 and a tenth peripheral nozzle 11, concentrically arranged around the central nozzle 1 in this order. The eleven-tube structure type multitubular burner shown in FIG. 1 was used in the Examples described below.

In general, when a porous quartz glass body is produced by VAD method, a silicon raw material (for example, silicon tetrachloride), a combustible gas (generally hydrogen gas), a combustion supporting gas (generally oxygen gas), and an inert gas (for example, nitrogen gas) as a sealing gas are fed to a multitubular burner in a reactor.
The silicon raw material is fed to the multitubular burner in a gaseous state, that is, as a gas of the silicon raw material.
Of those gases, the silicon raw material gas which becomes a glass forming material is fed to the central nozzle 1 of the multitubular burner 100. A gas for diluting the silicon raw material is generally fed to the central nozzle of the multitubular burner together with a gasified silicon raw material. As the gas for diluting the silicon raw material, hydrogen gas used as a combustible gas and oxygen gas used as a combustion supporting gas are generally used. In the embodiment using the multitubular burner 100 shown in FIG. 1, hydrogen gas as a combustible gas is fed as a gas for diluting the silicon raw material to the central nozzle 1 together with the silicon raw material (silicon tetrachloride). A combustible gas, a combustion supporting gas (generally oxygen gas) and an inert gas as a sealing gas are fed to the peripheral nozzles of the multitubular burner, respectively. In the embodiment using the multitubular burner 100 shown in FIG. 1, the following gases are fed to the first peripheral nozzle 2 to the tenth peripheral nozzle 11, respectively.
First peripheral nozzle 2: Hydrogen gas (combustible gas)
Second peripheral nozzle 3: Nitrogen gas (inert gas (sealing gas))
Third peripheral nozzle 4: Oxygen gas (combustion supporting gas)
Fourth peripheral nozzle 5: Oxygen gas (combustion supporting gas)
Fifth peripheral nozzle 6: Nitrogen gas (inert gas (sealing gas))
Sixth peripheral nozzle 7: Hydrogen gas (combustible gas)
Seventh peripheral nozzle 8: Nitrogen gas (inert gas (sealing gas))
Eighth peripheral nozzle 9: Hydrogen gas (combustible gas)
Ninth peripheral nozzle 10: Nitrogen gas (inert gas (sealing gas))
Tenth peripheral nozzle 11: Oxygen gas (combustion supporting gas)
However, gas species fed to each nozzle of the multitubular burner are not limited to the above gases. For example, where oxygen gas as a combustion supporting gas is fed as a gas for diluting the silicon raw material to the central nozzle 1 together with the silicon raw material (silicon tetrachloride), the hydrogen gas (combustible gas) and the oxygen gas (combustion supporting gas) are preferably substituted with each other regarding the above-described gas species fed to each peripheral nozzle. The inert gas (nitrogen gas) fed as a sealing gas is preferably fed to a peripheral nozzle located between a peripheral nozzle feeding hydrogen gas (combustible gas) and a peripheral nozzle feeding oxygen gas (combustion supporting gas) so that those peripheral nozzles are not adjacent with each other. The reason for this is that when hydrogen gas (combustible gas) and oxygen gas (combustion supporting gas) are fed to mutually adjacent peripheral nozzles, combustion reaction occurs just close to the peripheral nozzles and may damage the peripheral nozzles.

The silicon raw material fed to the central nozzle 1 of the multitubular burner 100 and discharged from the central nozzle 1 is hydrolyzed in a flame projected from the multitubular burner and forms silica fine particles. The silica fine particles formed are deposited on a rotating target and grown thereon. Thus, a porous quartz glass body is produced.
FIG. 2 is a schematic view showing this procedure, and shows a positional relationship between the multitubular burner and the target. In FIG. 2, silica fine particles formed by hydrolyzing the silicon raw material in a flame 200 projected from the multitubular burner 100 are deposited on a rotating target 300, thereby forming a porous quartz glass body 400.
In the method for producing a porous quartz glass body of the present invention, the positional relationship between the multitubular burner and the target is predetermined as described below.

A first requirement is that the angle α between the central axis (shown by a broken line in FIG. 2) of the multitubular burner 100 and the rotation axis of the target 300 (shown by a broken line in FIG. 2) is less than 10°.
When the angle α between the central axis of the multitubular burner 100 and the rotation axis of the target 300 is less than 10°, the angle of the flow direction of the flame 200 projected from the multitubular burner 100 relative to the surface of the target 300 (or the surface of the porous quartz glass body 400 deposited on the target 300) becomes nearly vertical, and as a result, heat energy received from the flame 200 per unit area of the porous quartz glass body 400 increases. This makes it possible to produce the porous quartz glass body 400 having high bulk density, specifically, a porous quartz glass body having an average bulk density of 0.3 g/cm³ or more. Further, the angle α is preferably less than 8°.
Depending on the positional relationship between the multitubular burner 100 and the target 300, there may be a case where the central axis of the multitubular burner 100 and the rotation axis of the target 300 are not present on the same plane. In such a case, an angle between a line obtained by projecting the central axis of the multitubular burner 100 onto a plane that includes the rotation axis of the target 300 and is parallel to the central axis of the multitubular burner 100, and the rotation axis of the target 300 is taken as α .
The angle α made by the central axis of the multitubular burner 100 and the rotation axis of the target 300 is preferably 3° or more, and more preferably 5° or more in order to suppress turbulence of the flame 200 projected from the multitubular burner 100.

A second requirement is that when a diameter of an outermost periphery of the multitubular burner 100 is d mm, a distance between an end face of the central nozzle 1 of the multitubular burner 100 and an intersection point of the central axis of the multitubular burner 100 with the surface of the target 300 (or the surface of the porous quartz glass body 400 deposited on the target 300) (hereinafter the distance being referred to as a "a burner/target distance") is from 3d to 6d mm.
When the burner/target distance is within the above range, the burner/target distance is appropriately away from each other. It can give sufficient reaction time in the flame 200 projected from the multitubular burner 100 to the silicon raw material, and therefore, the silicon raw material can sufficiently react. Additionally, the burner/target distance is not excessively large. Therefore, it can suppress fluctuation of the flame 200 projected from the multitubular burner 200, more specifically, the fluctuation of a flame on a portion contacting the surface of the target 300 (or the surface of the porous quartz glass body 400 deposited on the target 300) (hereinafter this flame being referred to as a "flame contacting the surface of the target 300 (or the surface of the porous quartz glass body 400 deposited on the target 300)) of the flame 200 projected from the multitubular burner 200.

Where the burner/target distance is less than 3d, the burner/target distance is too short to give sufficient reaction time to the silicon raw material in the flame 200 projected from the multitubular burner 100, and therefore, the silicon raw material cannot sufficiently react. As a result, formation efficiency of silica fine particles and deposition efficiency of the silica fine particles onto the surface of the target 300 (or the surface of the porous quartz glass body 400 deposited on the target 300) are decreased, and a porous quartz glass body having high bulk density cannot be produced.
Furthermore, bulk density of the porous quartz glass body synthesized may be decreased by that a low temperature region of the flame 200 projected from the multitubular burner 100 comes into contact with the surface of the target 300 (or the surface of the porous quartz glass body 400 deposited on the target 300).

On the other hand, where the burner/target distance exceeds 6d, the burner/target distance is too large. Therefore, the fluctuation is liable to occur in the flame contacting the surface of the target 300 (or the surface of the porous quartz glass body 400 deposited on the target 300). Where the fluctuation occurs in the flame contacting the surface of the target 300 (or the surface of the porous quartz glass body 400 deposited on the target 300), disturbance occurs in the temperature difference having caused between the flame and the target, depending on the degree of the fluctuation. This leads to the phenomenon such that silica fine particles which should move toward a target deviate and silica fine particles deposit on an undesirable portion on the surface of a target. As a result, the problems of decrease in yield of a porous quartz glass body and distorted shape of a porous quartz glass body arise.
Furthermore, the amount of the silica fine particles deposited on the surface of the target 300 (or the surface of the porous quartz glass body 400 deposited on the target 300) by thermophoresis is decreased by contact of a low temperature region in the flame 200 projected from the multitubular burner 100 with the surface of the target 300 (or the surface of the porous quartz glass body 400 deposited on the target 300). As a result, the yield of the porous quartz glass body decreases.
Furthermore, the silica fine particles remain in the flame 200 for a long period of time. Therefore, the amount of the silica fine particles deposited on the surface of the target 300 (or the surface of the porous quartz glass body 400 deposited on the target 300) by thermophoresis is decreased even by an increase in the particles diameter of the silica fine particles. As a result, the yield of the porous quartz glass body decreases.
The burner/target distance is preferably from 4d to 5d.

In view of the above-described problems of a decreased yield of a porous quartz glass body and a distorted shape of a porous quartz glass body, the fluctuation of a flame contacting the surface of the target 300 (or the surface of the porous quartz glass body 400 deposited on the target 300) is required to be inhibited.
In the method for producing a porous quartz glass body of the present invention, in addition to the above two requirements,the flow rate of a gas fed to the multitubular burner 100 should satisfy the following specific conditions in order to inhibit the fluctuation of the flame 200 projected from the multitubular burner 100.

A third requirement is that when an opening area of the central nozzle 1 of the multitubular burner 100 is S_{c} mm², an amount of a gas fed to the central nozzle 1 is 0.30S_{c} liter/min or less under the standard state (0°C and 1 atm).
When a gas fed to the central nozzle 1 is only a silicon raw material, the amount of the silicon raw material fed is 0.30S_{c} liter/min or less under the standard state. On the other hand, when hydrogen gas used as a combustible gas or oxygen gas used as a combustion supporting gas are fed as a gas for diluting the silicon raw material to the central nozzle 1 together with the silicon raw material, the total amount of the silicon raw material fed and those gases fed is 0.30S_{c} liter/min or less under the standard state (0°C and 1 atm).
When the amount of a gas fed to the central nozzle 1 should satisfy the above conditions, a gas discharged from the central nozzle 1 forms laminar flow. Therefore, the fluctuation of the flame 200 projected from the multitubular burner 100 can be inhibited. Where the amount of a gas fed to the central nozzle 1 exceeds 0.30S_{c} liter/min under the standard state (0°C and 1 atm), a gas discharged from the central nozzle 1 is liable to form turbulent flow, and therefore the fluctuation of the flame 200 projected from the multitubular burner 100 is liable to occur.
From the above standpoints, the amount of a gas fed to the central nozzle 1 is preferably 0.20S_{c} liter/min or less under the standard state (0°C and 1 atm).

However, when the amount of a gas fed to the central nozzle 1 is too small, the amount of the silica fine particles formed or the amount of the silica fine particles deposited on the surface of the target 300 (or the surface of the porous quartz glass body 400 deposited on the target 300) decreases. Furthermore, sufficient amount of heat cannot be given to the silica fine particles deposited on the surface of the target 300 (or the surface of the porous quartz glass body 400 deposited on the target 300), and therefore the bulk density of the porous quartz glass body decreases. As a result, there may be a concern that a large-sized porous quartz glass body is not produced.
For the above reason, the amount of a gas fed to the central nozzle 1 is preferably 0.006S_{c} liter/min or more, more preferably 0.018S_{c} liter/min or more, further preferably 0.05 S_{c} liter/min or more, and especially preferably 0.1 S_{c} liter/min or more, under the standard state (0°C and 1 atm).

From the standpoint of inhibition of the fluctuation of the flame 200 projected from the multitubular burner 100, a gas discharged from the peripheral nozzles (2 to 11) of the multitubular burner 100 is desirably laminar flow. However, what is required in the method for producing a porous quartz glass body of the present invention is inhibition of the fluctuation in the flame contacting the surface of the target 300 (or the surface of the porous quartz glass body 400 deposited on the target 300). In view of this, a gas discharged from more inner peripheral nozzles among these peripheral nozzles (2 to 11) of the multitubular burner 100 is required to be laminar flow. Of these peripheral nozzles, nozzles from which an inert gas as a sealing gas is discharged have extremely small influence to the fluctuation of a flame by a gas discharged from the nozzle as compared with nozzles from which a combustible gas is discharged and nozzles from which a combustion supporting gas is discharged, and therefore may be disregarded.
In view of the above, regarding the peripheral nozzles, a gas fed to the nozzles is preferably controlled such that a gas discharged from relatively inner nozzles among the peripheral nozzles from which a combustible gas is discharged and the nozzles from which a combustion supporting gas is discharged forms laminar flow.

Looking to gas feeding nozzles to which a combustible gas is fed (combustible gas feeding nozzles), when an opening area of the innermost gas feeding nozzle among the gas feeding nozzles other than the central nozzle (the first peripheral nozzle 2 in the embodiment of the multitubular burner 100 shown in FIG. 1) is S_{f} mm², the amount of a gas fed to the gas feeding nozzle is preferably 0.33S_{f} liter/min or less, and more preferably 0.3S_{f} liter/min or less, under the standard state (0°C and 1 atm).
Looking to gas feeding nozzles to which a combustion supporting gas is fed (combustion supporting gas feeding nozzles), when an opening area of the innermost gas feeding nozzle among the gas feeding nozzles other than the central nozzle (the third peripheral nozzle 4 in the embodiment of the multitubular burner 100 shown in FIG. 1) is Sₛ mm², the amount of a gas fed to the gas feeding nozzle is preferably 0.1Sₛ liter/min or less, and more preferably 0.07Sₛ liter/min or less, under the standard state (0°C and 1 atm).

However, where the amounts of a combustible gas and a combustion supporting gas, fed to the multitubular burner 100 are too small, the temperature of the flame 200 projected from the multitubular burner 100 decreases and the temperature of the surface of the target 300 (or the surface of the porous quartz glass body 400 deposited on the target 300) decreases. As a result, there may be concerns that the degree of sintering of the silica fine particles deposited on those surfaces decreases and a porous quartz glass body having high bulk density is not obtained.
To produce a porous quartz glass body having high bulk density, the maximum temperature of the surface of the target 300 (or the surface of the porous quartz glass body 400 deposited on the target 300) is preferably maintained at from 1,000 to 1,300°C, and more preferably from 1,100 to 1,200°C.
In the case of considering the whole multitubular burner 100, the amount of a combustible gas fed is preferably 3 liter/min or more, more preferably 9 liter/min or more, further preferably 30 liter/min or more, and especially preferably 100 liter/min or more.
In the case of considering the whole multitubular burner 100, the amount of a combustion supporting gas fed is preferably 1.5 liter/min or more, more preferably 4.5 liter/min or more, further preferably 15 liter/min or more, and especially preferably 50 liter/min or more.

From the standpoint of inhibition of the fluctuation of the flame 200 projected from the multitubular burner 100, it is preferred to note the following points.

A volatile silicon raw material is preferably used as the silicon raw material fed to the central nozzle 1 of the multitubular burner 100. The use of a volatile silicon raw material can prevent occurrence of pulsation in a gas of the silicon raw material (occurrence of pulsation in a gas by repetition of liquefaction and volatilization of a silicon raw material) when passing through the multitubular burner 100. The pulsation of a gas of the silicon raw material becomes a cause of the fluctuation of the flame 200 projected from the multitubular burner 100. Therefore, use of a volatile silicon raw material can inhibit the fluctuation of the flame 200 projected from the multitubular burner 100.
In order for the silicon raw material to be volatile, vapor pressure of the silicon raw material is preferably 10,000 Pa or more at 100°C, more preferably 10,000 Pa or more at 80°C, further preferably 10,000 Pa or more at 60°C, and especially preferably 10,000 Pa at 40° C. The use of such a volatile silicon raw material having a high vapor pressure even at such a low temperature makes it hard to cause the pulsation in a gas of the silicon raw material. Therefore, the synthesis can be easily stabilized.

Production of a porous quartz glass body by VAD method is carried out in a given reactor. Although omitted in FIG. 2, the multitubular burner 100 and the target 300 are provided in a given reactor.
In such a reactor, occurrence of pressure variation in the reactor is substantially unavoidable for the reasons that a gas is fed from the multitubular burner 100 and unnecessary gas in the reactor is exhausted outside. However, the pressure variation in the reactor causes the fluctuation of the flame 200 projected from the multitubular burner 100, depending on the degree of the pressure variation. For this reason, the pressure variation in the reactor is preferably inhibited as possible. A method for inhibiting the pressure variation in a reactor includes a method of providing a pressure gauge in a reactor and adjusting an exhaust amount from the reactor or an intake amount to the reactor according to increase or decrease of pressure.

When temperature of an inner wall of a reactor is high, more specifically, when temperature of an inner wall of a reactor located lower than the surface of the target 300 (or the surface of the porous quartz glass body 400 deposited on the target 300) is high, temperature difference between the inner wall of the reactor and the porous quartz glass body 400 deposited on the target 300 is decreased. As a result, convection flow caused in a reactor is inhibited and the flame 200 projected from the multitubular burner 100 is stabilized. This is preferred from the standpoint of inhibition of the fluctuation of the flame 200 projected from the multitubular burner 100.
To obtain the above effect, the temperature of an inner wall of a reactor located lower than the surface of the target 300 (or the surface of the porous quartz glass body 400 deposited on the target 300) is maintained at preferably 300°C or higher, and more preferably 400°C or higher.

The inner wall of the reactor for conducting production of a porous quartz glass body is heated by radiation and the like from a flame projected from a burner. The temperature of the inner wall of a reactor affects temperature of the surface of the target 300 (or the surface of the porous quartz glass body 400 deposited on the target 300) on which silica fine particles are successively deposited.
When the temperature of the inner wall of the reactor is high, the temperature of the surface of the target 300 (or the surface of the porous quartz glass body 400 deposited on the target 300) on which silica fine particles are successively deposited is increased. In this case, bulk density of a porous quartz glass body produced is increased, but yield of the porous quartz glass body produced is decreased.
Therefore, it is necessary to balance the yield of the porous quartz glass body and the bulk density thereof by controlling the temperature of the surface of a target 300 (or the surface of a porous quartz glass body 400 deposited on the target 300) on which silica fine particles are deposited.
From those points, the temperature of an inner wall of a reactor located lower than the surface of the target 300 (or the surface of the porous quartz glass body 400 deposited on the target 300) is maintained at preferably from 300°C to 800°C, and more preferably from 400°C to 700°C.
When the temperature of the inner wall of the reactor is high, temperature difference between the inner wall of the reactor and a porous quartz glass body produced is decreased. As a result, convention flow in the reactor is inhibited, and a flame projected from a burner is stabilized.

In the invention, the target is preferably rotated at a constant rotation rate of from 3 rpm to 60 rpm. When the rotation rate of the target is lower than 3 rpm, the amount of silica fine particles deposited per revolution becomes too large, and the shape readily undergoes a change. Therefore, it may become hard to attain a stable synthesis. The rotation rate is more preferably 4 rpm or higher. On the other hand, when the rotation rate of the target is higher than 60 rpm, it may cause a turbulence of the gas flow in the reactor. Therefore, deposition of the silica fine particles may hardly occur and the yield may deteriorate. The rotation rate is more preferably 30 rpm or lower, further preferably 20 rpm or lower, and especially preferably 10 rpm or lower.

Specific examples of gas species fed to the multitubular burner 100 are described below.

### Silicon Raw Material

Specific examples of the silicon raw material include chlorides such as silicon tetrachloride (SiCl₄), SiHCl₃, SiH₂Cl₂ and SiH₃Cl, and alkoxysilanes represented by RₙSi(OR)₄₋ₙ wherein plural R's which may be the same or different and each independently represents an alkyl group having 1 to 4 carbon atoms, and n is an integer of 0 to 3. Of those, silicon tetrachloride (SiCl₄), tetramethoxysilane (Si(OCH₃)₄) and methyl trimethoxysilane (SiCH₃(OCH₃)₃) are preferred for the reason that vapor pressure thereof at 100°C is 10,000 Pa or more. Furthermore, hexamethyldisiloxane (Si(CH₃)₃OSi(CH₃)₃) is preferred.

### Combustible Gas

Hydrogen gas is generally used as a combustible gas. Other than hydrogen gas, hydrocarbons such as methane and ethane can be used as the combustible gas.

### Combustion Supporting Gas

Oxygen gas is generally used as a combustion supporting gas. Other than oxygen gas, air, ozone, nitrogen dioxide, nitrogen monoxide and dinitrogen monoxide can be used as the combustion supporting gas.

### Inert Gas

Other than nitrogen, rare gases such as helium, neon and argon can be used as an inert gas fed as a sealing gas.
Of those, nitrogen and argon are preferably used for the reason that those are inexpensive.

In the method for producing a quartz glass preform of the present invention, a quartz glass preform is obtained by heating the porous quartz glass body obtained by the above procedures under vacuum or in an atmosphere containing helium gas as a main component, and vitrifying the porous quartz glass body. The atmosphere containing helium gas as a main component means an atmosphere containing 50 % by volume or more of helium. The other gas that may be contained in the atmosphere may be one or more of air, nitrogen gas, argon, oxygen gas, and gas of a fluorine-containing compound. The atmosphere containing helium gas as a main component more preferably contains helium in a concentration of 70 % by volume or more, and further preferably contains helium in a concentration of 90% by volume or more, especially preferably contains helium in a concentration of 99 % by volume or more. As the heating conditions for vitrification, the heating temperature is preferably from 1,350 to 1,550°C, more preferably from 1,400 to 1,500°C, and most preferably from 1,440 to 1,460°C, and the heating time is preferably from 1 to 24 hours, more preferably 1 to 5 hours, and most preferably 1 to 3 hours.
To produce a quartz glass preform of 50 kg or more in mass or a quartz glass preform having a diameter of 400 mm or more, a porous quartz glass body having a diameter of 600 mm or more and an average bulk density of 0.3 g/cm³ or more is preferably used.
In order to produce a quartz glass preform of 50 kg or more in mass or a quartz glass preform having a diameter of 400 mm or more, it is preferred to adjust the flow rate of a gas and the angle α made by the central axis of the multitubular burner 100 and the rotation axis of the target while appropriately varying them from the initial phase of the synthesis up to entry into a stable phase. In the invention, the values of the flow rate of a gas and the angle α made by the central axis of the multitubular burner 100 and the rotation axis of the target means values of these synthesis parameters after entering the stable phase. After entering the stable phase, it is preferred not to change these synthesis parameters. In the case where the synthesis parameters are varied, the respective average value serves as the synthesis parameter.

### EXAMPLES

The present invention is described in more detail below by reference to the examples, but the invention is not construed as being limited to those examples.

### Example 1

The eleven-tube structure type multitubular burner 100 shown in FIG. 1 was used. The multitubular burner 100 comprises quartz-made tubes having a thickness of 1 mm to 2 mm and having a different diameter, coaxially arranged, and an outer diameter d of the outermost periphery is 128 mm. A quartz-made cylindrical hood having a length of 300 mm is attached to a tip of further periphery of the outermost periphery.
Silicon tetrachloride was used as a silicon raw material, and was gasified by a vaporizer set to 5°C. The silicon tetrachloride vaporized at 5°C had vapor pressure of about 15,000 Pa. For reference, silicon tetrachloride has vapor pressure at 100°C of exceeds 10,000 Pa.
Concentration of silicon tetrachloride fed to the central nozzle 1 can make 100 vol% by setting the temperature of the vaporizer to a boiling point (57°C) of silicon tetrachloride. In Example 1, however, a mixed gas of silicon tetrachloride and hydrogen gas (combustible gas) was fed to the central nozzle 1. Concentration of silicon tetrachloride in the mixed gas was about 15 vol%. The mixed gas was fed in an amount of 0.30S_{c} liter/min under the standard state (0°C and 1 atm) to the opening area S_{c} (=500 mm²) of the central nozzle 1.

Hydrogen gas was fed as a combustible gas to the first peripheral nozzle 2, the sixth peripheral nozzle 7 and the eighth peripheral nozzle 9. Specifically, the hydrogen gas was fed to the first peripheral nozzle 2 in an amount of 0.33 S_{f} liter/min under the standard state (0°C and 1 atm) to the opening area S_{f} (=280 mm²) of the nozzle 2. In the case of considering the whole multitubular burner 100, the amount of hydrogen gas fed was 300 Iiter/min.
Oxygen gas was fed as a combustion supporting gas to the third peripheral nozzle 4, the fourth peripheral nozzle 5 and the tenth peripheral nozzle 11. Specifically, the oxygen gas was fed to the third peripheral nozzle 4 in an amount of 0.07Sₛ liter/min under the standard state (0°C and 1 atm) to the opening area Sₛ (=720 mm²) of the nozzle 4. In the case of considering the whole multitubular burner 100, the amount of oxygen gas fed was 150 liter/min.
Nitrogen gas was fed as a sealing gas to the second peripheral nozzle 3, the fifth peripheral nozzle 6, the seventh peripheral nozzle 8 and the ninth peripheral nozzle 10 in the minimum amount to inhibit red heat of the nozzle end face.

The multitubular burner 100 was provided at the bottom of a nearly cylindrical reactor. A target was provided at the central portion of the cylindrical reactor. The target is a hollow sphere made of quartz and integrated with a shaft rotating at a rate of 5rpm, and has an outer diameter of 200 mm.
The multitubular burner 100 can freely set its mounting position and angle. In Example 1, the positional relationship between the multitubular burner 100 and the target 300 was set such that a distance between the end face of the central nozzle 1 of the multitubular burner 100 and an intersection point of a central axis of the multitubular burner 100 with the surface of the target 300 is 4.5d mm, and an angle α between a central axis of the multitubular burner 100 and a rotation axis of the target 300 is 9°.

The flame 200 projected from the multitubular burner 100 forms fluctuation-free laminar flow, and temperature distribution in the flame 200 was stabilized with the passage of time and spatially.
Silicon tetrachloride discharged from the central nozzle 1 was hydrolyzed in the flame 200 projected from the multitubular burner 100 to form silica fine particles, and the resulting silica fine particles were deposited on the surface of the target (lower face of the target). Because the silica particles are successively deposited on the lower face of the target, the target was gradually moved upwardly so as to maintain the distance between the end face of the central nozzle 1 of the multitubular burner 100 and an intersection of a central axis of the multitubular burner 100 with the surface of the porous quartz glass body 400 deposited on the target 300 as being always 4.5d mm.

To reduce turbulence of airflow due to low temperature of an inner wall of the reactor, the reactor was covered with a heat-insulating material, and an inner wall temperature of the reactor located lower than the surface of the target 300 (or the surface of the porous quartz glass body 400 successively deposited on the surface of the target 300) was maintained at 300°C or higher. In this case, when surface temperature of the porous quartz glass body 300 contacting the flame 200 projected from the multitubular burner 100 is measured by radiation thermometer, the maximum temperature fluctuated between 1,100°C and 1,200°C.

By performing the production under the above conditions, deposition of silica fine particles formed by hydrolysis in the flame 200 to the target 300 by thermophoresis is accelerated, and a porous quartz glass body having high bulk density could be produced while maintaining high yield. The porous quartz glass body produced at the time of 50 hours from the initiation of synthesis had an average diameter of 600 mm and an average bulk density of 0.3 g/cm³, and the yield was 70%.
The porous quartz glass body was heated at 1,450°C for 2 hours in vacuum to vitrify the glass body. Thus, 50 kg of a cylindrical quartz glass preform having a diameter of 450 mm was obtained in a yield of nearly 100% (yield to raw material is 70%) to the porous quartz glass body.

### Example 2

A porous quartz glass body was produced by conducting the same procedures as in Example 1, except that a five-tube structure type multitubular burner (a burner of a structure having from the central nozzle 1 to the fourth peripheral nozzle 5 in the multitubular burner 100 shown in FIG. 1) was used as the multitubular burner. The porous quartz glass body thus obtained was vitrified. Thus, a quartz glass preform was obtained.
Outer diameter d of the outermost periphery of the multitubular burner is 64 mm. A quartz-made cylindrical hood having a length of 300 mm is mounted on the tip of further periphery of the outermost periphery.
A mixed gas of silicon tetrachloride and hydrogen gas (concentration of silicon tetrachloride is about 15 vol%) was fed to the central nozzle of the multitubular burner in an amount of 0.30S_{c} liter/min under the standard state (0°C and 1 atm) to the opening area S_{c} (=500 mm²) of the central nozzle.
Hydrogen gas was fed as a combustible gas to the first peripheral nozzle of the multitubular burner. Specifically, the hydrogen gas was fed to the first peripheral nozzle in an amount of 0.33S_{f} liter/min under the standard state (0°C and 1 atm) to the opening area S_{f} (=280 mm²) of the nozzle. In the case of considering the whole multitubular burner, the amount of hydrogen gas fed was 200 liter/min
Oxygen gas was fed as a combustion supporting gas to the third peripheral nozzle and the fourth peripheral nozzle of the multitubular burner. Specifically, the oxygen gas was fed to the third peripheral nozzle in an amount of 0.07S, liter/min under the standard state (0°C and 1 atm) to the opening area Sₛ (=720 mm²) of the nozzle. In the case of considering the whole multitubular burner, the amount of oxygen gas fed was 100 liter/min.
Nitrogen gas was fed as a sealing gas to the second peripheral nozzle of the multitubular burner in the minimum amount to inhibit red heat of the nozzle end face.
The porous quartz glass body produced at the time of 50 hours from the initiation of synthesis had an average diameter of 400 mm, and an average bulk density of 0.3 g/cm³, and the yield was 80%.
The porous quartz glass body was vitrified. Thus, 50 kg of a cylindrical quartz glass preform having a diameter of 400 mm was obtained in a yield of nearly 100% (yield to raw material is 80%) to the porous quartz glass body.

### Example 3

The same five-tube structure type multitubular burner as in Example 2 was used. However, the amount of a gas fed to the central nozzle (amount of mixed gas fed) was 0.15S_{c} liter/min, the amount of a gas fed to the first peripheral nozzle (amount of hydrogen gas fed) was 0.18S_{f} Liter/min, and the amount of a gas fed to the third peripheral nozzle (amount of oxygen gas fed) was 0.05Sₛ liter/min. In the case of considering the whole multitubular burner, the amount of hydrogen gas fed was 110 liter/min, and the amount of oxygen gas fed was 56 liter/min.
The porous quartz glass body produced at the time of 50 hours from the initiation of synthesis had an average diameter of 400 mm and an average bulk density of 0.3 g/cm³, and the yield was 90%.
The porous quartz glass body was vitrified. Thus, 50 kg of a cylindrical quartz glass preform having a diameter of 400 mm was obtained in a yield of nearly 100% (yield to raw material is 90%) to the porous quartz glass body.

### Example 4

A porous quartz glass body was produced by conducting the same procedures as in Example I, and the porous quartz glass body obtained was vitrified. Thus, a quartz glass preform was obtained. However, tetraethoxysilane (vapor pressure at 100°C: 17,000 Pa) was used as a silicon raw material.
Temperature of a vaporizer was set to 110°C, and the tetraethoxysilane was gasified by the vaporizer and fed to the central nozzle of the multitubular burner. Fluctuation occurred by the flame projected from the multitubular burner. It is considered that the cause of the fluctuation is due to that pulsation occurred in a gas discharged from the multitubular burner by repetition of liquefaction and volatilization of a silicon raw material (tetraethoxysilane) in the multitubular burner.
As a result that fluctuation occurred in the flame projected from the multitubular burner, deposition of silica fine particles formed by hydrolysis in the flame 200 to the target 300 by thermophoresis is disturbed, and yield of the porous quartz glass body was decreased to 50%.
The porous quartz glass body produced at the time of 50 hours from the initiation of synthesis had an average diameter of 450 mm, and an average bulk density of 0.3 g/cm³_{.}
The porous quartz glass body was vitrified. Thus, 50 kg of a cylindrical quartz glass preform having a diameter of 450 mm was obtained in a yield of nearly 100% (yield to raw material is 50%) to the porous quartz glass body.

### Comparative Example 1

A porous quartz glass body was produced by conducting the same procedures as in Example 1, and the porous quartz glass body obtained was vitrified. Thus, a quartz glass preform was obtained. However, the amount of a mixed gas fed to the central nozzle of the multitubular burner was 0.35S_{c} liter/min under the standard state (0°C and 1 atm).
Fluctuation (turbulent flow) occurred in a central portion of the flame projected from the multitubular burner. As a result, yield of the porous quartz glass body was decreased to 40%.
The porous quartz glass body produced at the time of 50 hours from the initiation of synthesis had an average diameter of 450 mm, and an average bulk density of 0.3 g/cm³_{.}
The porous quartz glass body was vitrified. Thus, 50 kg of a cylindrical quartz glass preform having a diameter of 450 mm was obtained in a yield of nearly 100% (yield to raw material is 40%) to the porous quartz glass body.

### Comparative Example 2

A porous quartz glass body was produced by conducting the same procedures as in Example 1. However, a distance between the end face of the central nozzle 1 of the multitubular burner 100 and an intersection point of the central axis of the multitubular burner 100 with the surface of the target 300 was maintained 6.5d mm.
Fluctuation occurred in the flame contacting the surface of the target 300 (or the surface of the porous quartz glass body 400 deposited on the surface of the target 300), and the amount of the silica fine particles deposited on the surface of the target 300 was considerably decreased.
10 kg of a porous quartz glass body was obtained at the time of passing 50 hours from the initiation of synthesis. Yield was 10%.
In Comparative Example 2, vitrification of the porous quartz glass body obtained was not conducted.

### Comparative Example 3

A porous quartz glass body was produced by conducting the same procedures as in Example 1. However, a distance between the end face of the central nozzle 1 of the multitubular burner 100 and an intersection point of the central axis of the multitubular burner 100 with the surface of the target 300 was maintained 2.5d mm.
At the time that mass of the porous quartz glass body was 30 kg, the porous quartz glass body could not sustain by the weight itself and collapsed.

### Comparative Example 4

A porous quartz glass body was produced by conducting the same procedures as in Example 1. However, an angle α between a central axis of the multitubular burner 100 and a rotation axis of the target 300 was 15°.
Pull-up rate of the target at the time of the production of the porous quartz glass body was 2 times or more faster than that of Example 1. It is presumed from this fact that a porous quartz glass body having lower bulk density is produced as compared with Example 1. When synthesis was stopped at the time that mass of the porous quartz glass body was 50 kg, a narrow porous quartz glass body having a diameter of 400 mm was obtained. For vitrification, the porous quartz glass body was moved. As a result, the porous quartz glass body collapsed by vibration.

## Claims

1. A method for producing a porous quartz glass body (400), comprising feeding a silicon raw material to a central nozzle (1) of a multitubular burner (400) having a plurality of gas feeding nozzles arranged concentrically pattern, hydrolyzing the silicon raw material in a flame (200) projected from the multitubular burner (100) to form silica fine particles in a reactor, and depositing and growing the formed silica fine particles on a rotating target (300),
wherein the multitubular burner (100) comprises a combustible gas feeding nozzle and a combustion supporting gas feeding nozzle, **characterized in that**
an angle between a central axis of the multitubular burner (100) or a line obtained by projecting the central axis of the multitubular burner (100) onto a plane that includes a rotation axis of the target (300) and is parallel to the central axis of the multitubular burner (100), and the rotation axis of the target (300) is less than 10°.
a distance between an end face of the central nozzle (1) of the multitubular burner (100) and an intersection point of a central axis of the multitubular burner (100) with a surface of the target (300) or a surface of the porous quartz glass body (400) deposited on the target (300) is from 3d to 6d mm, in which d is a diameter of an outermost periphery of the multitubular burner (100), and
an amount of a gas fed to the central nozzle (1) is 0.30S_{c} liter/min or less under the standard state (0°C and 1 atm), in which S_{c} mm² is an opening area of the central nozzle (1) of the multitubular burner (100).

2. The method for producing a porous quartz glass body (400) as claimed in claim 1, wherein an amount of a gas fed to the innermost combustible gas feeding nozzle among gas feeding nozzles other than the central nozzle (1) is 0.33S_{f} liter/min or less under the standard state (0°C and 1 atm), in which S_{f} mm² is an opening area of said gas feeding nozzle.

3. The method for producing a porous quartz glass body (400) as claimed in claim 1 or 2, wherein an amount of a gas fed to the innermost combustion supporting gas feeding nozzle among gas feeding nozzles other than the central nozzle (1) is 0.1Sₛ liter/min or less under the standard state (0°C and 1 atm), in which Sₛ mm² is an opening area of said gas feeding nozzle.

4. The method for producing a porous quartz glass body (400) as claimed in any one of claims 1 to 3, wherein the silicon raw material fed to the central nozzle (1) of the multitubular burner (100) has a vapor pressure of 10,000 Pa or more at 100°C.

5. The method for producing a porous quartz glass body (400) as claimed in
any one of claims 1 to 4, wherein the reactor has an inner wall that is located lower than a surface of the target (300) or a surface of the porous quartz glass body (300) deposited on the target (300), and wherein the inner wall has a temperature maintained at 300°C or higher.

6. The method for producing a porous quartz glass body (400) as claimed in
any one of claims 1 to 5, wherein a surface of the porous quartz glass body (400) contacting the flame (200) projected from the multitubular burner (100) has a maximum temperature of 1,000 to 1,300°C.

7. A method for producing a quartz glass preform, comprising :
the method for producing a porous quartz glass body (400) as claimed in any one of claims 1 to 6; heating the porous quartz body (400) in vacuum or in an atmosphere containing helium gas as a main component; and vitrifying the porous quartz glass body (400).

## Patentansprüche

1. Verfahren zur Herstellung eines porösen Quarzglaskörpers (400), umfassend Zuführen eines Siliziumrohmaterials zu einer Zentraldüse (1) eines mehrröhrigen Brenners (100), der eine Mehrzahl an Gaszuführungsdüsen aufweist, angeordnet in einem konzentrischen Muster, Hydrolysieren des Siliziumrohmaterials in einer Flamme (200), ausgestoßen von dem mehrröhrigen Brenner (100), zum Bilden von Siliziumoxidfeinteilchen in einem Reaktor, und Abscheiden und Wachsenlassen der gebildeten Siliziumoxidfeinteilchen auf einem rotierenden Target (300),
wobei der mehrröhrige Brenner (100) eine Brenngas-zuführende Düse und eine Verbrennungsunterstützungsgas-zuführende Düse umfasst, **dadurch gekennzeichnet, dass**
ein Winkel zwischen einer Zentralachse des mehrröhrigen Brenners (100) oder einer Linie, erhalten durch Projizieren der Zentralachse des mehrröhrigen Brenners (100) auf eine Ebene, die eine Rotationsachse des Targets (300) einschließt und parallel zu der Zentralachse des mehrröhrigen Brenners (100) ist, und der Rotationsachse des Targets (300) geringer als 10° ist,
ein Abstand zwischen einer Endfläche der Zentraldüse (1) des mehrröhrigen Brenners (100) und einem Schnittpunkt einer Zentralachse des mehrröhrigen Brenners (100) mit einer Oberfläche des Targets (300) oder einer Oberfläche des porösen Quarzglaskörpers (400), abgeschieden auf dem Target (300), von 3d bis 6d mm beträgt, wobei d ein Durchmesser eines äußersten Rands des mehrröhrigen Brenners (100) ist, und
eine Menge eines Gases, zugeführt zu der Zentraldüse (1), 0,30S_{c} Liter/min oder weniger unter dem Standardzustand (0°C und 1 atm) beträgt, wobei S_{c} mm² eine Öffnungsfläche der Zentraldüse (1) des mehrröhrigen Brenners (100) ist.

2. Verfahren zur Herstellung eines porösen Quarzglaskörpers (400) nach Anspruch 1, wobei eine Menge eines Gases, zugeführt zu der innersten Brenngas-zuführenden Düse unter den Gas-zuführenden Düsen außer der Zentraldüse (1), 0,33S_{f} Liter/min oder weniger unter dem Standardzustand (0°C und 1 atm) beträgt, wobei S_{f} mm² eine Öffnungsfläche der Gas-zuführenden Düse ist.

3. Verfahren zur Herstellung eines porösen Quarzglaskörpers (400) nach Anspruch 1 oder 2, wobei eine Menge eines Gases, zugeführt zu der innersten Verbrennungsunterstützungsgas-zuführenden Düse unter den Gas-zuführenden Düsen außer der Zentraldüse (1), 0,1Sₛ Liter/min oder weniger unter dem Standardzustand (0°C und 1 atm) beträgt, wobei Sₛ mm² eine Öffnungsfläche der Gas-zuführenden Düse ist.

4. Verfahren zur Herstellung eines porösen Quarzglaskörpers (400) nach einem der Ansprüche 1 bis 3, wobei das Siliziumrohmaterial, zugeführt zu der Zentraldüse (1) des mehrröhrigen Brenners (100), einen Dampfdruck von 10.000 Pa oder mehr bei 100°C aufweist.

5. Verfahren zur Herstellung eines porösen Quarzglaskörpers (400) nach einem der Ansprüche 1 bis 4, wobei der Reaktor eine Innenwand aufweist, die niedriger als eine Oberfläche des Targets (300) oder eine Oberfläche des porösen Quarzglaskörpers (400), abgeschieden auf dem Target (300), angeordnet ist, und wobei die Innenwand eine Temperatur, beibehalten bei 300°C oder höher, aufweist.

6. Verfahren zur Herstellung eines porösen Quarzglaskörpers (400) nach einem der Ansprüche 1 bis 5, wobei eine Oberfläche des porösen Quarzglaskörpers (400), welche die Flamme (200), ausgestoßen von dem mehrröhrigen Brenner (100), berührt, eine Maximaltemperatur von 1.000 bis 1.300°C aufweist.

7. Verfahren zur Herstellung einer Quarzglasvorform, umfassend:
das Verfahren zur Herstellung eines porösen Quarzglaskörpers (400) nach einem der Ansprüche 1 bis 6;
Erhitzen des porösen Quarzglaskörpers (400) im Vakuum oder in einer Atmosphäre, die Heliumgas als einen Hauptbestandteil enthält; und Vitrifizieren des porösen Quarzglaskörpers (400).

## Revendications

1. Procédé de production d'un corps en verre de quartz poreux (400), comprenant
l'alimentation d'une matière première de silicium dans une buse centrale (1) d'un brûleur multitubulaire (100) comportant une pluralité de buses d'alimentation en gaz agencées en motif concentrique, l'hydrolyse de la matière première de silicium dans une flamme (200) projetée depuis le brûleur multitubulaire (100) afin de former des particules fines de silice dans un réacteur, et le dépôt et la croissance des particules fines de silice formée s sur une cible rotative (300),
dans lequel le brûleur multitubulaire (100) comprend une buse d'alimentation en gaz combustible et une buse d'alimentation en gaz d'entretien de combustion, **caractérisé en ce que**
un angle entre un axe central du brûleur multitubulaire (100) ou une ligne obtenue en projetant l'axe central du brûleur multitubulaire (100) sur un plan qui comprend un axe de rotation de la cible (300) et est parallèle à l'axe central du brûleur multitubulaire (100), et l'axe de rotation de la cible (300) est inférieur à 10° ;
une distance entre une face d'extrémité de la buse centrale (1) du brûleur multitubulaire (100) et un point d'intersection d'un axe central du brûleur multitubulaire (100) avec une surface de la cible (300) ou une surface du corps en verre de quartz poreux (400) déposé sur la cible (300) est de 3d à 6d mm, où d est un diamètre d'une périphérie la plus externe du brûleur multitubulaire (100), et
une quantité d'un gaz délivré à la buse centrale (1) est de 0,30 S_{c} litre/min ou moins dans l'état normal (0 °C et 1 atm), où S_{c} mm² est une aire d'ouverture de la buse centrale (1) du brûleur multitubulaire (100).

2. Procédé de production d'un corps en verre de quartz poreux (400) selon la revendication 1, dans lequel une quantité d'un gaz délivré à la buse d'alimentation en gaz combustible la plus interne parmi les buses d'alimentation en gaz autres que la buse centrale (1) est de 0,33 S_{f} litre/min ou moins dans l'état normal (0 °C et 1 atm), où S_{f} mm² est une aire d'ouverture de ladite buse d'alimentation en gaz.

3. Procédé de production d'un corps en verre de quartz poreux (400) selon la revendication 1 ou 2, dans lequel une quantité d'un gaz délivré dans la buse d'alimentation en gaz d'entretien de combustion la plus interne parmi les buses d'alimentation en gaz autres que la buse centrale (1) est de 0,1 Sₛ litre/min ou moins dans l'état normal (0 °C et 1 atm), où Sₛ mm² est une aire d'ouverture de ladite buse d'alimentation en gaz.

4. Procédé de production d'un corps en verre de quartz poreux (400) selon l'une quelconque des revendications 1 à 3, dans lequel la matière première de silicium délivrée à la buse centrale (1) du brûleur multitubulaire (100) a une pression de vapeur de 10 000 Pa ou plus à 100 °C.

5. Procédé de production d'un corps en verre de quartz poreux (400) selon l'une quelconque des revendications 1 à 4, dans lequel le réacteur comporte une paroi interne qui est située plus bas qu'une surface de la cible (300) ou qu'une surface du corps en verre de quartz poreux (400) déposé sur la cible (300), et dans lequel la paroi interne a une température maintenue à 300 °C ou plus.

6. Procédé de production d'un corps en verre de quartz poreux (400) selon l'une quelconque des revendications 1 à 5, dans lequel une surface du corps en verre de quartz poreux (400) venant en contact avec la flamme (200) projetée depuis le brûleur multitubulaire (100) a une température maximale de 1 000 à 1 300 °C.

7. Procédé de production d'une préforme en verre de quartz, comprenant :
le procédé de production d'un corps en verre de quartz poreux (400) tel que revendiqué dans l'une quelconque des revendications 1 à 6 ;
le chauffage du corps en verre de quartz poreux (400) sous vide ou dans une atmosphère contenant du gaz hélium en tant que composant principal ; et
la vitrification du corps en verre de quartz poreux (400).
